# EUROPÄISCHE PATENTSCHRIFT

(11) **EP 1 161 488 B1**
(45) Veröffentlichungstag und Bekanntmachung des Hinweises auf die Patenterteilung: **06.05.2004**
(21) Anmeldenummer: 00907512.8
(22) Anmeldetag: 07.02.2000
(51) Int. Cl.: C08K 3/34, C08K 7/00

(54) **THERMOPLASTISCHE NANOCOMPOSITES**
THERMOPLASTIC NANOCOMPOSITES
NANOCOMPOSITES THERMOPLASTIQUES

(30) Priorität: 10.02.1999 DE 19905503
(43) Veröffentlichungstag der Anmeldung: 12.12.2001
(73) Patentinhaber: BASF AKTIENGESELLSCHAFT, 67056 Ludwigshafen (DE)
(72) Erfinder: GRUTKE, Stefan, D-67434 Neustadt (DE); MEHLER, Christof, D-67061 Ludwigshafen (DE)
(74) Vertreter: Isenbruck, Günter, Dr.
(86) Internationale Anmeldenummer: PCT/EP2000/000967
(87) Internationale Veröffentlichungsnummer: WO 2000/047662

(56) Entgegenhaltungen:
- WO-A-98/36022
- DATABASE WPI Section Ch, Week 199428 Derwent Publications Ltd., London, GB; Class A17, AN 1994-230722 XP002138864 & JP 06 166780 A (TONEN KAGAKU KK), 14. Juni 1994 (1994-06-14)

## Beschreibung

Die Erfindung betrifft thermoplastische Nanocomposites mit vorteilhaft ausgeglichenem mechanischem Eigenschaftsprofil.

Verbundmaterialien aus organischen Polymeren wie Polyamiden und schichtförmigen Silikaten (Phyllosilikate) sind bekannt. Diese Materialien zeichnen sich durch eine hohe Steifigkeit aus. Neben einer Verbesserung der Steifigkeit nimmt jedoch die Zähigkeit durch den Zusatz der Phyllosilikate ab.

Üblicherweise wird eine dauerhafte Mischung des organischen Materials mit dem anorganischen Material durch Modifizierung des anorganischen Materials in einem vorgeschalteten Schritt erreicht.

WO93/04117 betrifft Compositematerialien, die eine Polymermatrix und darin dispergierte plättchenförmige Partikel, bevorzugt Phyllosilikate, aufweisen. Die Partikel sind mit Oniumverbindungen der allgemeinen Formeln

⁺NH₃R¹, ⁺NH₂R²R³, ⁺PR⁴R⁵R⁶R⁷

verknüpft, also hydrophobiert. Die Hydrophobierung wird in einem der Mischung mit dem Polymeren vorgeschalteten Schritt durchgeführt.

DE-A 43 21 247 betrifft Polyamid-Harzmassen, die eine Polyamid-Komponente und einen anorganischen Füllstoff enthalten. Zur dauerhaften Mischung des Polyamids und der anorganischen Füllstoffe können auf die anorganischen Füllstoffe bekannte Silankupplungsmittel in einem vorgeschalteten Schritt aufgebracht werden.

Eine Aufgabe der vorliegenden Erfindung ist es, thermoplastische Nanocomposites mit einem ausgeglichen vorteilhaften mechanischen Profil bereitzustellen. Dabei soll eine Modifizierung des anorganischen Materials durch einen vorgeschalteten Schritt, zum Beispiel eine Hydrophobierung der eingesetzten Phyllosilikate, eingespart werden.

Diese Aufgabe wird durch thermoplastische Nanocomposites, enthaltend
a) einen thermoplastischen Kunststoff (A), in dem 0,1 bis 10 Gew.-% der in Komponente (A) vorliegenden Monomereinheiten ionische Gruppen tragen und
b) mindestens ein Phyllosilikat (B), das gleichmäßig in der Komponente (A) dispergiert ist,
gelöst.

Bevorzugt tragen 2 bis 8 Gew.-%, besonders bevorzugt 4 bis 6 Gew.-% der in Komponente (A) vorliegenden Monomereinheiten ionische Gruppen.

Die erfindungsgemäßen thermoplastischen Nanocomposites weisen gegenüber bekannten thermoplastischen Nanocomposites eine höhere Wärmeformbeständigkeit, höhere Festigkeit und höhere Steifigkeit von daraus hergestellten Spritzgußteilen auf.

Gegenüber glasfaserverstärkten thermoplastischen Kunststoffen wird eine Verbesserung der Oberfläche von aus den thermoplastischen Nanocomposites hergestellten Formkörpern bei vergleichbaren mechanischen Eigenschaften bei niedrigerem Füllstoffgehalt erreicht.

Vorzugsweise enthalten die erfindungsgemäßen thermoplastischen Nanocomposites
a) 30 bis 99,99 Gew.-%, bevorzugt 30 bis 79 Gew.-%, besonders bevorzugt 30 bis 68 Gew.-% der Komponente (A),
b) 0,01 bis 20 Gew.-%, bevorzugt 1 bis 15 Gew.-%, besonders bevorzugt 4 bis 10 Gew.-% der Komponente (B),
c) 0 bis 50 Gew.-%, bevorzugt 10 bis 30 Gew.-%, besonders bevorzugt 15 bis 20 Gew.-% weiterer Füllstoffe (C),
d) 0 bis 50 Gew.-%, bevorzugt 10 bis 30 Gew.-%, besonders bevorzugt 15 bis 20 Gew.-% weiterer Zusatzstoffe (D),
worin die Summe aller Komponenten 100 Gew.-% ergibt.

### Komponente A: thermoplastische Kunststoffe

Die thermoplastischen Kunststoffe sind vorzugsweise ausgewählt aus Polyamiden, Vinylpolymeren, Polyestern, Polycarbonaten, Polyaldehyden und Polyketonen. Besonders bevorzugt sind Polyamide.

Als polyamidbildende Monomere kommen Lactame wie ε-Caprolactam, Önantlactam, Capryllactam und Lauryllactam sowie deren Mischungen, bevorzugt ε-Caprolactam in Frage. Als weitere polyamidbildende Monomere können beispielsweise Dicarbonsäuren, wie Alkandicarbonsäuren mit 6 bis 12 Kohlenstoffatomen, insbesondere 6 bis 10 Kohlenstoffatomen, wie Adipinsäure, Pimelinsäure, Korksäure, Azelainsäure oder Sebazinsäure sowie Terephthalsäure und Isophthalsäure, Diamine wie C₄- bis C₁₂-Alkyldiamine, insbesondere mit 4 bis 8 Kohlenstoffatomen wie Hexamethylendiamin, Tetramethylendiamin oder Octamethylendiamin, ferner m-Xylylendiamin, Bis-(4-aminophenyl)-methan, Bis-(4-aminophenyl)-propan-2,2 oder Bis-(4-aminocyclohexyl)-methan, sowie Mischungen von Dicarbonsäuren und Diaminen jeweils für sich in beliebigen Kombinationen im Verhältnis zueinander, jedoch vorteilhaft im äquivalenten Verhältnis wie Hexamethylendiammoniumadipat, Hexamethylendiammoniumterephthalat oder Tetramethylendiammoniumadipat, bevorzugt Hexamethylendiammoiumadipat und Hexamethylendiammoniumterephthalat eingesetzt werden. Besondere technische Bedeutung haben Polycaprolactam, Polyamide, die aus Hexamethylendiamin und Adipinsäure und Polyamide, die aus ε-Caprolactam, Hexamethylendiamin, Isophthalsäure und/oder Terephthalsäure aufgebaut sind, insbesondere Polyamid 6 (aus ε-Caprolactam) und Polyamid 6,6 (aus Hexamethylendiamin/Adipinsäure) erlangt.

Zur Herstellung von Vinylpolymeren geeignete Monomere sind Ethylen, Propylen, Butadien, Isopren, Chloropren, Vinylchlorid, Vinylidenchlorid, Vinylfluorid, Vinylidenfluorid, Styrol, α-Methylstyrol, Divinylbenzol, Acrylsäure, Methylacrylat, Ethylacrylat, n-Propylacrylat, Isopropylacrylat, n-Butylacrylat, Isobutylacrylat, tert.-Butylacrylat, Methacrylsäure, Methylmethacrylat, Ethylmethacrylat, n-Propylmethacrylat, Isopropylmethacrylat, n-Butylmethacrylat, Isobutylmethacrylat, tert.-Butylmethacrylat, Acrylamid, Methacrylamid, Ethylacrylamid, n-Propylacrylamid, Isopropylacrylamid, Acrylnitril, Vinylalkohol, Norbonadien, N-Vinylcarbazol, Vinylpyridin, 1-Buten, Isobuten, Vinylidencyanid, 4-Methylpenten-1-vinylacetat, Vinylisobutylether, Methylvinylketon, Vinylvinylketon, Methylvinylether, Vinylvinylether, Vinylvinylsulfid und Acrolein. Diese Monomeren können alleine oder in Kombination untereinander verwendet werden. Bevorzugte Vinylpolymere sind Polystyrol, insbesondere syndiotaktisches Polystyrol, Polyethylen, Polypropylen und Polyvinylchlorid.

Des weiteren sind Polyester als thermoplastische Kunststoffe geeignet, bevorzugt auf der Basis von Terephthalsäure und Diolen, besonders bevorzugt sind Polyethylenterephthalat und Polybutylenterephthalat.

Weitere geeignete thermoplastische Kunststoffe sind Polycarbonate, Polyketone und Polyaldehyde wie Polyoxymethylen.

Erfindungsgemäß tragen 0,1 bis 10 Gew.-%, bevorzugt 2 bis 8 Gew.-%, besonders bevorzugt 4 bis 6 Gew.-% der in Komponente (A) vorliegenden Monomereinheiten ionische Gruppen.

Dadurch wird eine dauerhafte Mischung des anorganischen Materials mit dem thermoplastischen Kunststoff erreicht, ohne daß eine Modifizierung des anorganischen Materials in einem vorgeschalteten Schritt durchgeführt werden muß.

Als ionische Gruppen sind vorzugsweise anionische Gruppen wie Carboxylate, Sulfonate, Phosphate geeignet, soweit die entsprechenden, zur Polymerisation geeigneten Monomere herstellbar sind. Besonders bevorzugt handelt es sich bei den ionischen Gruppen in den Monomereinheiten um Carboxylate und Sulfonate. Ganz besonders bevorzugt ist Natriumsulfoisophthalsäure.

Als entsprechende Monomere sind beispielsweise Tri- und Tetracarbonsäuren sowie Carbonsäuredianhydride und Salze von Tri- und Tetrasulfonsäuren geeignet.

Beispiele für Tricarbonsäuren sind Benzol-1,2,3-tricarbonsäure, 2-Methyl-benzol-1,3,5-tricarbonsäure, Trimellitsäure (Benzol-1,2,4-tricarbonsäure) und cis,cis-1,3,5-Trimethylcyclohexan-1,3,5-tricarbonsäure.

Beispiele für Tetracarbonsäuren sind Cyclopentan-1,2,3,4-tetracarbonsäure, Cyclobutan-1,2,3,4-tetracarbonsäure und 2,2-Dimethyl-cyclobutan-1,1,3,3-tetracarbonsäure.

Als Carbonsäuredianhydride sind beispielsweise Pyromellitsäuredianhydrid, Naphthalin-1,4,5,8-tetracarbonsäuredianhydrid und 3,3,4,4-Biphenyltetracarbonsäuredianhydrid geeignet.

Geeignete Salze von Tri- und Tetrasulfonsäuren sind beispielsweise Naphthalin-1,3,6-trisulfonsäure Trinatriumsalz, 8-Tetradecyloxypyren-1,3,6-trisulfonsäure Trinatriumsalz und Pyren-1,3,6,8-tetrasulfonsäure Tetranatriumsalz.

Bevorzugt werden Carbonsäuredianhydride eingesetzt, besonders bevorzugt ist Pyromellitsäuredianhydrid.

In der wässrigen Polymerisationslösung liegen die genannten Monomere in Form ihrer entsprechenden Anionen vor.

### Komponente B: Phyllosilikate

Unter einem Phyllosilikat (Schichtsilikat) versteht man im allgemeinen Silikate, in welchen die SiO₄-Tetraeder in zweidimensionalen unendlichen Netzwerken verbunden sind. (Die empirische Formel für das Anion lautet (Si₂O₅²⁻ₙ)). Die einzelnen Schichten sind durch die zwischen ihnen liegenden Kationen miteinander verbunden, wobei meistens als Kationen Na, K, Mg, Al oder/und Ca in den natürlich vorkommenden Schichtsilikaten vorliegen.

Als Beispiele für synthetische und natürliche Phyllosilikate (Schichtsilikate) seien Montmorillonit, Smectit, Illit, Sepiolit, Palygorskit, Muscovit, Allevardit, Amesit, Hectorit, Fluorhectorit, Saponit, Beidellit, Talkum, Nontronit, Stevensit, Bentonit, Glimmer, Vermiculit, Fluorvermiculit, Halloysit und Fluor enthaltende synthetische Talkum-Typen genannt. Besonders bevorzugt ist Montmorillonit.

Die Schichtdicken der Phyllosilikate betragen üblicherweise 5 bis 100 Å und ganz besonders bevorzugt 8 bis 25 Å (Abstand der Schichtoberkante zur folgenden Schichtoberkante).

Hierbei ist es möglich, den Schichtabstand weiter zu vergrößern, indem man das Phyllosilikat beispielsweise mit Polyamidmonomeren z.B. bei Temperaturen von 25 bis 300 °C, vorzugsweise von 80 bis 280°C und insbesondere von 80 bis 260 °C über eine Verweilzeit von in der Regel von 5 bis 120 Min., vorzugsweise von 10 bis 60 Min., umsetzt (Quellung). Je nach Dauer der Verweilzeit und Art des gewählten Monomeren vergrößert sich der Schichtabstand zusätzlich um 10 bis 150 Å, vorzugsweise um 10 bis 50 Å. Die Länge der Blättchen beträgt üblicherweise bis zu 2000 Å, vorzugsweise bis zu 1500 Å. Etwa vorhandene oder sich aufbauende Präpolymere tragen in der Regel ebenfalls zur Quellung der Schichtsilikate bei.

### Komponente (C): Füllstoffe

Als Füllstoffe eignen sich teilchen- oder faserförmige Füllstoffe. Als teilchenförmige Füllstoffe eignen sich Carbonate wie Magnesiumcarbonat (Kreide). Bevorzugt werden faserförmige Füllstoffe eingesetzt. Beispiele geeigneter faserförmiger Füllstoffe sind Kohlenstoffasern, Kaliumtitanatwhisker, Aramidfasern oder Glasfasern. Besonders bevorzugt werden Glasfasern verwendet. Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 16 µm. Die Einarbeitung der Glasfasern kann sowohl in Form von Kurzglasfasem als auch in Form von Endlossträngen (Rovings) erfolgen. Kohlenstoff- oder Glasfasern können auch in Form von Geweben, Matten oder Glasseidenrovings eingesetzt werden.

### Komponente (D): Zusatzstoffe

Die Zusammensetzungen können darüber hinaus Zusatzstoffe enthalten. Als solche Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleit- und Entformungsmittel, Flammschutzmittel, Farbstoffe und Pigmente und Weichmacher zu nennen.

Pigmente und Farbstoffe sind allgemein in Mengen von 0 bis 4 Gew.-%, bevorzugt von 0,5 bis 3,5 Gew.-% und besonders bevorzugt von 0,5 bis 3 Gew.-%, bezogen auf das Gesamtgewicht der Zusammensetzungen, enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 PbCO₃ · Pb(OH)₂), Lithopone, Antimonweiß und Titandioxid. Von den beiden gebräuchlichsten Kristallmodikfikationen (Rutil- und Anatas-Typ) des Titandioxids wird insbesondere die Rutilform zur Weißfärbung der erfindungsgemäßen thermoplastischen Nanocomposites verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78 ff.).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel erhältlich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithiumhalogenide, ggf. in Verbindung mit Kupfer-(I)-Halogeniden, z.B. Chloriden Bromiden oder Iodiden. Die Halogenide, insbesondere des Kupfers, können auch noch elektronenreiche π-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, im allgemeinen in Konzentrationen bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

### Verfahren zur Herstellung der erfindungsgemäßen thermoplastischen Nanocomposites

Die Herstellung der erfindungsgemäßen thermoplastischen Nanocomposites kann auf unterschiedlichen Wegen erfolgen.

### 1. In-situ-Methode

In der In-situ-Methode wird das Phyllosilikat (B) in Suspension oder als Feststoff mit zu dem thermoplastischen Kunststoff (A) polymerisierbaren Monomeren, wobei 0,1 bis 10 Gew.-% der Monomere ionische Gruppen tragen, gemischt. Es folgt eine Quellung des Phyllosilikats mit den Monomeren. Die anschließende Polymerisation der Monomere kann in üblicher Weise durchgeführt werden. Die so erhaltenen Nanocomposites werden anschließend gegebenenfalls mit weiteren Komponenten (C) und (D) konfektioniert.

Unter Konfektionierung ist im Sinne der vorliegenden Erfindung die Mischung der Komponenten, aus denen die Nanocomposites aufgebaut sind, zum Beispiel im Extruder, zum fertigen Nanocomposite zu verstehen.

Dazu werden die hydrophobierten Phyllosilikate (B) in flüssigen, zur Komponente (A) (thermoplastische Kunststoffe) polymeriserbaren Monomeren suspendiert und in Gegenwart von im allgemeinen 0,1 bis 8 Gew.-%, bevorzugt von 0,1 bis 7 Gew.-% Wasser, bezogen auf die Monomeren, polymerisiert. Bevorzugt wird die Polymerisation in Gegewart von mehr als 0,2 Gew.-% Wasser, beispielsweise von 0,25 bis 6 Gew.-% Wasser durchgeführt.

Das Wasser kann der Suspension zugegeben werden. Enthalten diese Suspensionen bereits Wasser, wird entweder kein weiteres Wasser zugegeben oder nur soviel Wasser zugesetzt, daß die Gesamtmenge an Wasser, bezogen auf die Monomeren, in dem erfindungsgemäßen Bereich liegt.

Um eine möglichst gute Durchmischung zu erhalten, wird die Suspension vorteilhafterweise gerührt, besonders bevorzugt mit hoher Scherung. Hierzu eignen sich z.B. Rührkessel. Anschließend wird im allgemeinen das Wasser auf einmal, in Portionen oder kontinuierlich zugegeben, wobei die Temperaturen der Suspension im allgemeinen im Bereich von 70 bis 100°C, bevorzugt im Bereich von 75 bis 95°C liegen. Die Temperatur der wasserhaltigen Suspension wird entweder gleichzeitig oder anschließend in der Regel auf 180 bis 330°C, bevorzugt 220 bis 320°C erhöht. Die Suspension kann entweder in dem Aggregat verbleiben, in dem sie hergestellt wurde, oder vor oder nach der Temperaturerhöhung oder vor oder nach der Wasserzugabe in ein anderes Reaktionsgefäß überführt werden. Besonders vorteilhaft wird die Polymerisation unter gleichzeitiger Scherung durchgeführt.

Diverse Verfahrensführungen können für die Herstellung der erfindungsgemäßen Zusammensetzungen angewendet werden. Die Herstellung kann z.B. mittels eines diskontinuierlichen (Batchprozeß) oder eines kontinuierlich geführten Verfahrens erfolgen.

Bei dem diskontinuierlichen Verfahren kann die wasserhaltige Suspension bei den oben angegebenen Temperatur- und Scherbedingungen und unter Druck polymerisiert werden. Der Druck liegt dabei in der Regel im Bereich von 5 bis 30 bar, bevorzugt im Bereich von 8 bis 20 bar (absolut). Die Verweilzeiten sind dabei im wesentlichen von den gewählten Temperaturen während der Polymerisation abhängig und liegen in der Regel im Bereich von 0,5 bis 3 h. Im allgemeinen wird nach Erreichen des Gleichgewichtsumsatzes das Wasser verdampft und der Druck auf Atmosphärendruck erniedrigt. Noch in der Schmelze vorhandenes Wasser kann auch bei diesem Druck zu weiterem Molekulargewichtsaufbau führen. Anschließend wird das Reaktionsgemisch ausgetragen, beispielsweise in Form von Schmelzprofilen, abgekühlt, zweckmäßigerweise, indem es durch ein Wasserbad geleitet wird, und zerkleinert, bevorzugt granuliert. In der Regel weisen so erhaltene, bevorzugt hergestellte Polyamide Molekulargewichte von bis zu 22000 g/mol, bevorzugt im Bereich von 8000 bis 22000 g/mol auf.

Das kontinuierliche Verfahren wird nach einer bevorzugten Ausführungsform in der Regel so ausgeführt, daß man die wasserhaltige Suspension, deren Temperatur im Bereich von 70 bis 100°C, bevorzugt von 75 bis 95°C beträgt, kontinuierlich einer ersten Reaktionszone zuführt und dort unter den oben angegebenen Temperatur- und Scherbedingungen polymerisiert. Gemäß einer besonderen Ausführungsform können der ersten Reaktionszone außer der wäßrigen Suspension noch Präpolymere anderer oder der gleichen Monomere zugeführt werden. Diese können beispielsweise aus der Extraktion von Produktgranulat stammen (s. unten). Der Druck in der ersten Reaktionszone liegt im allgemeinen unter 5 bar (absolut). Er kann beispielsweise von 1 bis 3 bar (absolut) betragen.

Die Verweilzeit, die im wesentlichen von Temperatur, Druck und Wassergehalt des Reaktionsgemisches abhängt, wählt man in der Regel im Bereich von 2 bis 5 h, bevorzugt von 3 bis 4 h. Werden Präpolymere zu der ersten Reaktionsstufe zudosiert, sind die Verweilzeiten im allgemeinen kürzer als 2 h, beispielsweise 0,5 bis 1 h. In der ersten Reaktionszone wird bei Einsatz von Caprolactoam üblicherweise bis zu einem Molekulargewicht von 3000 g/mol oder darüber, bevorzugt im Bereich 5000 bis 7000 g/mol polykondensiert. Die Endgruppensummenkonzentration kann hierbei beispielsweise im Bereich von 200 bis 600 mmol'kg, vorzugsweise von 300 bis 400 mmol/kg liegen.

Aus der ersten Reaktionszone wird die Reaktionsmischung in eine zweite Reaktionszone geleitet. Bevorzugt ist das Reaktionsgefäß der zweiten Reaktionszone, das beispielsweise röhrenförmig sein kann, mit Einbauten ausgestattet. Dazu zählen geordnete Mischelemente wie Füllkörper (z.B. Raschigringe, Kugeln oder Pallringe), damit vorzugsweise eine Mindestverweildauer der noch nicht umgesetzten Monomere in der Schmelze (zwecks Erzielung eines hohen Umsatzes) gewährleistet ist, und Zonen, in denen kein oder nur ein minimaler Transport der Schmelze erfolgt ("Totzonen"), sowie eine Rückvermischung möglichst vermieden wird. Die Temperaturen in der zweiten Reaktionszone liegen im allgemeinen im selben Bereich wie die in der ersten Reaktionszone. Die Verweilzeit in der zweiten Reaktionszone kann je nach Monomerart, Temperatur, Druck und Beschaffenheit des Reaktionsgefäßes in weiten Grenzen variieren. Im allgemeinen ist die Verweilzeit in der zweiten Reaktionszone dann länger, wenn in der ersten Reaktionszone kein Präpolymer zugegeben wurde. Die Polymerschmelze wird aus der zweiten Reaktionszone im allgemeinen in Form von Schmelzprofilen ausgetragen, mittels eines Wasserbades abgekühlt und zerkleinert, bevorzugt granuliert. So erhaltenen Polyamide können z.B. Molekulargewichte im Bereich von 12000 bis 22000 g/mol aufweisen.

Sowohl die nach dem diskontinuierlichen als auch nach dem kontinuierlichen Verfahren erhaltenen Zusammensetzungen können noch flüchtige Bestandteile wie eingesetztes Lactam (beispielsweise bei Polymerisation von Caprolactam) und weitere Monomereinheiten sowie wasserdampfflüchtige Oligomere aufweisen. Diese entfernt man in der Regel mit Wasser aus dem Polymergranulat durch Gegenstromextraktion (s. z.B. DD-A 206999). Eine weitere Möglichkeit ist die Gasphasenextraktion (s. EP-A 0 284 968) mit gleichzeitigem Molekulargewichtsaufbau, bei der mittels überhitztem Wasserdampf gleichzeitig extrahiert und getempert werden kann. In einer bevorzugten Ausführungsform führt man die flüchtigen Bestandteile kontinuierlich quantitativ in den Prozeß zurück, d.h. vorzugsweise in die erste Reaktionszone. Hierzu wird bevorzugt das Extraktionswasser auf einen Extraktgehalt von höchstens 85 Gew.-% aufkonzentriert und der Wassergehalt des erhaltenen Konzentrates durch Zugabe von frischen Monomeren so eingestellt, daß die Polymerisation in Gegenwart der erfindungsgemäßen Wassermenge ausgeführt werden kann. Wird die Polymerisation auf diese Weise durchgeführt, wird in der Regel während der Polymerisation mindestens eine adiabatische Entspannung zur Verringerung des Wassergehaltes vorgenommen (s. DE-A-19 752 181).

Die gewünschte Viskositätszahl des Endprodukts kann man auch in an sich bekannter Weise durch Trocknung beziehungsweise bei der Temperung in fester Phase durch Polymerisation einstellen.

Die gewünschte Viskositätszahl des Endprodukts liegt hierbei im allgemeien im Bereich von 80 bis 350 ml/g, bevorzugt 120 bis 200 ml/g (gemessen als 0,5 Gew.-%ige Lösung in 95 gew.-%iger Schwefelsäure, nach Abtrennen der unlöslichen Bestandteile)

Die so erhaltenen Nanocomposites werden gegebenenfalls mit weiteren Komponenten (C) und (D) nach üblichen Verfahren, zum Beispiel im Extruder konfektioniert.

### 2. Melt intercalation

In einer weiteren bevorzugten Ausführungsform können die erfindungsgemäßen thermoplastischen Nanocomposites dadurch erhalten werden, daß man den thermoplastischen, ionische Gruppen aufweisenden Kunststoff (Komponente A) und das Phyllosilikat (Komponente B) sowie gegebenenfalls die Komponenten (C) und (D) nach allgemein bekannten Verfahren, z.B. mittels Extrusion, bei Temperaturen im Bereich von 160 bis 320°C, besonders bevorzugt bei 240 bis 300°C mischt. Dazu eignet sich bevorzugt ein Zweischneckenextruder mit hoher Scherung, wobei vorzugsweise Scherspannungen gemäß DIN 11 443 von 10 bis 10⁵ Pa, insbesondere 10² bis 10⁴ Pa vorliegen.

Die erhaltenen erfindungsgemäßen thermoplastischen Nanocomposites zeichnen sich insbesondere durch eine hervorragende Zähigkeit bei sehr guter Steifigkeit aus. Sie können zur Herstellung von Formkörpern verwendet werden. Solche Formkörper können vorzugsweise durch Extrusion, Tiefziehen oder Spritzgußverarbeitung hergestellt werden.

Ein weiterer Gegenstand der vorliegenden Erfindung sind daher Formkörper, erhältlich unter Verwendung der erfindungsgemäßen Nanocomposites.

Die nachfolgenden Beispiele erläutern die Erfindung zusätzlich.

### Beispiele

### Beispiel 1:

Herstellung eines Polyamid 6 (Polycaprolactam) mit 5 Gew.-% Pyromellitsäuredianhydrid (1,2,4,5-Benzoltetracarbonsäuredianhydrid)/ Hexamethylendiamin (HMD) in Gegenwart von ausgereinigtem Bentonit. Die Polymerisation von Caprolactam wurde in Gegenwart von 5 Gew.-% Pyromellitsäuredianhydrid/HMD durchgeführt. Die Polykondensation wird unter üblichen Bedingungen durchgeführt.

### Beispiel 2:

Herstellung eines Polyamid 6 mit 5 Gew.-% Pyromellitsäuredianhydrid/HMD und anschließende Konfektionierung mit ausgereinigtem Bentonit. Die Herstellung von A erfolgt wie in Beispiel 1. Anschließende Konfektionierung aller Einsatzstoffe mit ZSK 40 bei 275°C unter üblichen Bedingungen.

### Beispiel 3:

Herstellung eines Polyamid 6,6 aus (Adipinsäure/Hexamethylendiamin) mit 3 Gew.-% Natriumsulfoisophthalsäure/HMD und anschließende Konfektionierung mit ausgerinigtem Bentonit. Die Polymerisation von AH-Salz (Hexamethylendiammoniumadipat) wurde in Gegenwart von 5 Gew.-% Pyromellitsäuredianhydrid/HMD durchgeführt.

### Vergleichsbeispiel 1:

Herstellung eines Polyamid in Gegenwart von ausgereinigtem Bentonit gemäß Beispiel 1.

### Vergleichsbeispiel 2:

Herstellung eines Polyamid 6 und anschließende Konfektionierung mit ausgerinigtem Bentonit gemäß Beispiel 2.

### Vergleichsbeispiel 3:

Herstellung eines Polyamid 6,6 in Gegenwart von hydrophobierten Bentonit.

### Anwendungstechnische Untersuchungen:

Die Viskositätszahl der Matrix wurde an 0,5 gew.-/igen Lösungen in Schwefelsäure bei 23°C bestimmt.

Die Formbeständigkeitstemperatur (Heat-Deflection-Temperature, HDT) wird gemäß ISO 75 (trocken) bestimmt.

Der Schmelzindex (MVI-Wert) wurde bei einer Temperatur von 275°C unter einer Belastung von 5 kg bestimmt.

Die Schlagzähigkeiten nach Charpy (aₙ[kJ/m²]) wurden an ungekerbten ISO-Stäben nach ISO 179-Teil I gemessen.

Der Zugversuch wurde gemäß ISO 527-2 durchgeführt.

Die Ergebnisse der anwendungstechnischen Untersuchungen sind in Tabelle 1 zusammengestellt.

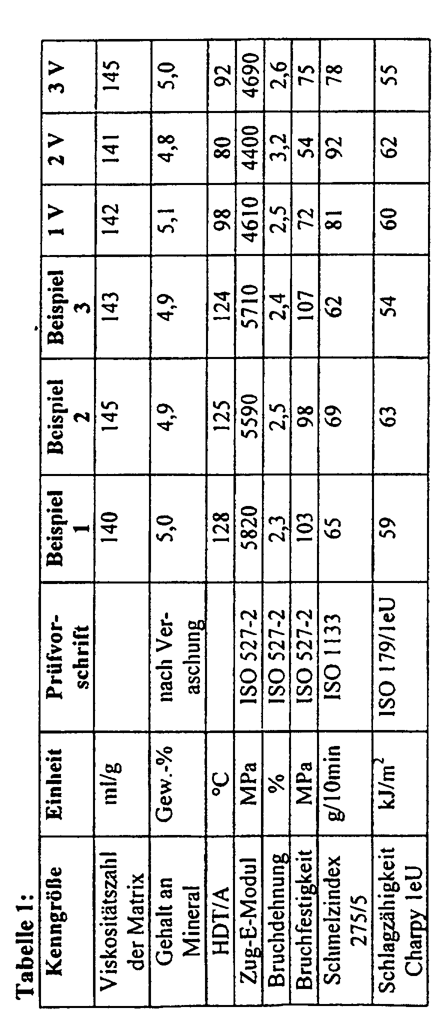

## Patentansprüche

1. Thermoplastische Nanocomposites, enthaltend
a) einen thermoplastischen Kunststoff (A), in dem 0,1 bis 10 Gew.-% der in Komponente (A) vorliegenden Monomereinheiten ionische Gruppen tragen,
b) mindestens ein Phyllosilikat (B), das gleichmäßig in der Komponente (A) dispergiert ist.

2. Thermoplastische Nanocomposites nach Anspruch 1, enthaltend
a) 30 bis 99,99 Gew.-% der Komponente (A),
b) 0,01 bis 20 Gew.-% der Komponente (B),
c) 0 bis 50 Gew.-% weiterer Füllstoffe (C),
d) 0 bis 50 Gew.-% weiterer Zusatzstoffe (D),
worin die Summe aller Komponenten 100 Gew.-% ergibt.

3. Thermoplastische Nanocomposites nach Anspruch 2, enthaltend
a) 30 bis 79 Gew.-% der Komponente (A),
b) 1 bis 12 Gew.-% der Komponente (B),
c) 10 bis 30 Gew.-% weiterer Füllstoffe (C),
d) 10 bis 30 Gew.-% weiterer Zusatzstoffe (D),
worin die Summe aller Komponenten 100 Gew.-% ergibt.

4. Thermoplastische Nanocomposites nach einem der Ansprüche 1 bis 3, **dadurch gekennzeichnet, daß** die Komponente (A) ein Polyamid ist.

5. Thermoplastische Nanocomposites nach einem der Ansprüche 1 bis 4, **dadurch gekennzeichnet, daß** die ionischen Gruppen in den Monomereinheiten ausgewählt sind aus Carboxylaten und Sulfonaten.

6. Verfahren zur Herstellung thermoplastischer Nanocomposites nach einem der Ansprüche 1 bis 5 nach einer In-situ-Methode, in der das Phyllosilikat (B) in Suspension oder als Feststoff mit den zum thermoplastischen Kunststoff (A) polymerisierbaren Monomeren gemischt wird, eine Quellung des Phyllosilikats mit den Monomeren erfolgt, anschließend eine Polymerisation der Monomere durchgeführt wird und die so erhaltenen Nanocomposites gegebenenfalls mit den Komponenten (C) und (D) konfektioniert werden.

7. Verfahren zur Herstellung thermoplastischer Nanocomposites nach einem der Ansprüche 1 bis 5 durch Melt intercalation, wobei der thermoplastische Kunststoff (Komponente A), das Phyllosilikat (Komponente B) sowie gegebenenfalls die Komponenten (C) und (D) bei Temperaturen im Bereich von 160 bis 320°C gemischt werden.

8. Verwendung von thermoplastischen Nanocomposites nach einem der Ansprüche 1 bis 5 zur Herstellung von Formkörpem.

9. Formkörper erhältlich unter Verwendung von thermoplastischen Nanocomposites nach einem der Ansprüche 1 bis 5.

10. Verfahren zur Herstellung von Formkörpern nach Anspruch 9 durch Extrusion, Tiefziehen oder Spritzgußverarbeitung.

## Claims

1. A thermoplastic nanocomposite comprising
a) a thermoplastic (A), in which from 0.1 to 10% by weight of the monomer units present in component (A) bear ionic groups, and
b) at least one phyllosilicate (B), uniformly dispersed in component (A).

2. A thermoplastic nanocomposite as claimed in claim 1, comprising
a) from 30 to 99.99% by weight of component (A),
b) from 0.01 to 20% by weight of component (B),
c) from 0 to 50% by weight of other fillers (C), and
d) from 0 to 50% by weight of other additives (D),
where all of the components together give 100% by weight.

3. A thermoplastic nanocomposite as claimed in claim 2, comprising
a) from 30 to 79% by weight of component (A),
b) from 1 to 12% by weight of component (B),
c) from 10 to 30% by weight of other fillers (C), and
d) from 10 to 30% by weight of other additives (D),
where all of the components together give 100% by weight.

4. A thermoplastic nanocomposite as claimed in any of claims 1 to 3, wherein component (A) is a polyamide.

5. A thermoplastic nanocomposite as claimed in any of claims 1 to 4, wherein the ionic groups in the monomer units have been selected from carboxylates and sulfonates.

6. A process for preparing a thermoplastic nanocomposite as claimed in any of claims 1 to 5 by an in-situ method in which the phyllosilicate (B) in suspension or as a solid is mixed with the monomers polymerizable to give the thermoplastic (A), swelling of the phyllosilicate by the monomers takes place, and then polymerization of the monomers is carried out and the resultant nanocomposites are, where appropriate, compounded with components (C) and (D).

7. A process for preparing a thermoplastic nanocomposite as claimed in any of claims 1 to 5 by melt intercalation, where the thermoplastic (component A), the phyllosilicate (component B), and also, where appropriate, components (C) and (D) are mixed at from 160 to 320°C.

8. The use of thermoplastic nanocomposites as claimed in any of claims 1 to 5 for producing moldings.

9. A molding obtainable using thermoplastic nanocomposites as claimed in any of claims 1 to 5.

10. A process for producing a molding, as claimed in claim 9, by extrusion, thermoforming or injection molding.

## Revendications

1. Nanocomposites thermoplastiques, contenant :
a) une matière thermoplastique (A), dans laquelle 0,1 à 10% en poids des unités monomères présentes dans le composant (A) portent des radicaux ioniques ;
b) au moins un phyllosilicate (B), qui est dispersé de manière homogène dans le composant (A).

2. Nanocomposites thermoplastiques selon la revendication 1, contenant :
a) 30 à 99,99% en poids du composant (A) ;
b) 0,01 à 20% en poids du composant (B) ;
c) 0 à 50% en poids d'autres charges (C) ;
d) 0 à 50% en poids d'autres additifs (D),
où la somme de tous les composants donne 100% en poids.

3. Nanocomposites thermoplastiques selon la revendication 2, contenant :
a) 30 à 79% en poids du composant (A) ;
b) 1 à 12% en poids du composant (B) ;
c) 10 à 30% en poids d'autres charges (C) ;
d) 10 à 30% en poids d'autres additifs (D),
où la somme de tous les composants donne 100% en poids.

4. Nanocomposites thermoplastiques selon l'une quelconque des revendications 1 à 3, **caractérisés en ce que** le composant (A) est un polyamide.

5. Nanocomposites thermoplastiques selon l'une quelconque des revendications 1 à 4, **caractérisés en ce que** les radicaux ioniques dans les unités monomères sont choisis parmi les carboxylates et les sulfonates.

6. Procédé de préparation de nanocomposites thermoplastiques selon l'une quelconque des revendications 1 à 5, selon un procédé in situ, dans lequel le pyllosilicate (B) en suspension ou comme matière solide est mélangé aux monomères polymérisables en matière thermoplastique (A), on réalise un gonflement du phyllosilicate avec les monomères, ensuite on effectue la polymérisation des monomères et les nanocomposites ainsi obtenus sont formulés le cas échéant, avec les composants (C) et (D).

7. Procédé de préparation de nanocomposites thermoplastiques selon l'une quelconque des revendications 1 à 5, par intercalation à l'état fondu, où la matière thermoplastique (composant A), le phyllosilicate (composant B), ainsi que le cas échéant les composants (C) et (D) sont mélangés à des températures situées dans l'intervalle allant de 160 à 320°C.

8. Utilisation de nanocomposites thermoplastiques selon l'une quelconque des revendications 1 à 5, pour la préparation d'articles moulés.

9. Articles moulés obtenus par utilisation des nanocomposites thermoplastiques selon l'une quelconque des revendications 1 à 5.

10. Procédé de préparation d'articles moulés selon la revendication 9, par extrusion, emboutissage profond ou moulage par injection.
